# EUROPÄISCHE PATENTSCHRIFT

(11) **EP 1 390 131 B1**
(45) Veröffentlichungstag und Bekanntmachung des Hinweises auf die Patenterteilung: **20.07.2005**
(21) Anmeldenummer: 02750891.0
(22) Anmeldetag: 07.05.2002
(51) Int. Cl.: B01F 5/06, B01F 13/00, B01J 19/00

(54) **VERFAHREN UND STATISCHER MIKROVERMISCHER ZUM MISCHEN MINDESTENS ZWEIER FLUIDE**
METHOD AND STATIC MICROMIXER FOR MIXING AT LEAST TWO FLUIDS
PROCEDE ET MICROMELANGEUR STATIQUE CONCU POUR MELANGER AU MOINS DEUX FLUIDES

(30) Priorität: 07.05.2001 DE 10123093
(43) Veröffentlichungstag der Anmeldung: 25.02.2004
(73) Patentinhaber: INSTITUT FÜR MIKROTECHNIK MAINZ GmbH, 55129 Mainz-Hechtsheim (DE)
(72) Erfinder: EHRFELD, Wolfgang, 55124 Mainz (DE); HARDT, Steffen, 55129 Mainz (DE)
(74) Vertreter: Fuchs Mehler Weiss & Fritzsche
(86) Internationale Anmeldenummer: PCT/EP2002/004998
(87) Internationale Veröffentlichungsnummer: WO 2002/089962

(56) Entgegenhaltungen:
- WO-A-02/16017
- DE-B- 1 262 236
- US-A- 5 573 334
- US-A- 5 887 977

## Beschreibung

Die Erfindung betrifft ein Verfahren gemäß Patentanspruch 1 und einen statischen Mikrovermischer zum Mischen mindestens zweier Fluide gemäß dem Oberbegriff von Patentanspruch 10.

Statische Mikrovermisher sind aus der DE-C1-195 40 292 und aus der DE-A1-195 41 266 bekannt.

Ziel beim Mischen mindestens zweier Fluide ist das Erreichen einer gleichförmigen Verteilung der beiden Fluide in einer bestimmten, in der Regel möglichst kurzen Zeit. Besonders vorteilhaft werden hierzu statische Mikrovermischer eingesetzt, wie sie in der Übersicht von W. Ehrfeld, V. Hessel, H. Löwe in Microreactors, New Technology for Modern Chemistry, Wiley-VCH 2000, Seiten 41 bis 85 dargestellt sind. Für die Mischung von Flüssigkeiten werden mit bekannten statischen Mikrovermischern durch Erzeugen abwechselnd benachbarter Fluidlamellen einer Stärke im µm-Bereich Mischzeiten zwischen 1 s und wenigen Millisekunden erzielt. Die Vermischung von Gasen findet aufgrund der höheren Diffusionskonstanten noch deutlich schneller statt. Im Gegensatz zu dynamischen Mischern, in denen turbulente Strömungsverhältnisse vorherrschen, wird in statischen Mikrovermischern durch die vorgegebene Geometrie ein exaktes Einstellen der Breite der Fluidlamellen und damit der Diffusionswege ermöglicht. Die hierdurch in statischen Mikrovermischern erzielte sehr enge Verteilung der Mischzeiten erlaubt vielfältige Möglichkeiten der Optimierung von chemischen Umsetzungen im Hinblick auf Selektivität und Ausbeute. Ein weiterer Vorteil von statischen Mikrovermischern ist die Verkleinerung der Bauteilgröße und damit Integrierbarkeit in weitere Systeme, wie Wärmetauscher und Reaktoren.

Durch das Zusammenwirken zweier oder mehrerer auf so engem Raum zusammengeschalteter Komponenten ergeben sich wiederum neue Möglichkeiten der Prozeßoptimierung. Die Anwendungspotenziale von Mikrovermischern erstrecken sich von flüssig-flüssig und gas-gas Mischungen zur Bildung von flüssig-flüssig Emulsionen, gas-flüssig Dispersionen und damit auch zu Mehrphasen- und Phasentransfer-Reakrtionen. Nachteile dieser bekannten Mikrovermischer sind hohe Druckverluste, die bei der Durchleitung der zu mischenden Fluide durch eine Vielzahl sehr schmaler Kanäle auftreten, sowie eine Verstopfung durch mitgeförderte oder während eines Prozesses entstehende Partikel.

Die Erfindung hat zur Aufgabe, ein Verfahren und einen statischen Mikrovermischer zum Mischen mindestens zweier Fluide zur Verfügung zu stellen, die einen geringeren Druckverlust bei gleichzeitig sehr schneller und gleichmäßiger Mischung sowie kleinem Bauraum ermöglichen.

Die Aufgabe wird erfindungsgemäß mit einem Verfahren gemäß Anspruch 1 und einem statischen Mikrovermischer gemäß Anspruch 10 gelöst.

Nachfolgend wird unter dem Begriff Fluid ein gasförmiger oder flüssiger Stoff oder ein Gemisch solcher Stoffe verstanden, das einen oder mehrere feste, flüssige oder gasförmige Stoffe gelöst oder dispergiert enthalten kann.

Der Begriff Mischen umfaßt auch die Vorgänge Lösen, Dispergieren und Emulgieren. Demzufolge umfaßt der Begriff Mischung Lösungen, flüssig- flüssig-Emulsionen, gas-flüssig- und fest-flüssig-Dispersionen.

Abwechselnd benachbarte Fluidlamellen oder Zuführkanäle bedeutet bei zwei Fluiden A, B, daß diese in mindestens einer Ebene alternierend, eine Reihenfolge von ABAB ergebend, nebeneinander liegen. Der Begriff "abwechselnd benachbart" umfaßt bei drei Fluiden A, B, C unterschiedliche Reihenfolgen, wie beispielsweise ABCABC oder ABACABAC. Die Fluidlamellen oder Zuführkanäle können auch in mehr als einer Ebene abwechselnd benachbart liegen, beispielsweise in zwei Dimensionen schachbrettartig zueinander versetzt liegen.

Das erfindungsgemäße Verfahren zum Mischen von mindestens zwei Fluiden umfaßt mindestens zwei Verfahrensschritte. Im ersten Schritt werden die beiden Fluide als benachbarte Fluidlamellen in eine Wirbelkammer unter Ausbildung einer nach innen strömenden Fluidspirale eingeleitet. Im zweiten Verfahrensschritt wird die so gebildete Mischung aus dem Zentrum der Fluidspirale abgeleitet.

Das benachbarte Einleiten der Fluidlamellen in die Wirbelkammer bedeutet, daß die Fluidlamellen unmittelbar nebeneinander oder beabstandet zueinander eingeleitet werden.

Lediglich die in der äußersten Windung strömende Fluidlamelle grenzt an die seitlichen Innenflächen der Wirbelkammer an; die inneren Windungen der Fluidspirale grenzen zu beiden Seiten an die in gleicher Richtung strömenden Fluidlamellen der vorhergehenden und der nachfolgenden Windung. Daher trägt zur Reibung im wesentlichen lediglich der Kontakt mit der oberen und unteren Innenfläche der Wirbelkammer bei. Der mit diesem Mischer erzielte Druckverlust ist daher geringer als der bei einem Mischer mit einem entsprechend lang ausgebildeten Mischstrecke, in dem die Fluide als Fluidlamellen abwechselnd benachbart zueinander strömen. Darüber hinaus ist durch den spiralförmigen Verlauf eine kompakte Bauform bei langer Mischstrecke und damit langer Verweilzeit realisiert.

Ein weiterer Vorteil ist der Kontakt einer Windung der Fluidspirale mit der vorhergehenden und der nachfolgenden Windung, was zur diffusiven Mischung der Fluidlamellen untereinander beiträgt.

Vorteilhaft herrschen im Innern der Wirbelkammer laminare Strömungsverhältnisse vor. Es ist jedoch auch denkbar, in Teilbereichen turbulente Strömungsverhältnisse bei einem sich insgesamt spiralförmig nach innen fließenden Fluidstrom vorliegen zu haben.

Im Hinblick auf eine vollständige Mischung durch Diffusion weist der spiralförmig nach innen fließende Fluidstrom eine ausreichende Länge und damit eine ausreichende Anzahl an Windungen auf, um je in die Wirbelkammer einströmendem Fluidvolumen eine ausreichende Verweilzeit zu erzielen.

Die Fluidlamellen weisen beim Einleiten in die Wirbelkammer bevorzugt eine Breite im Bereich von 1 µm bis 1 mm sowie eine Tiefe im Bereich von 10 µm bis 10 mm und besonders bevorzugt eine Breite im Bereich von 5 µm bis 50 µm sowie eine Tiefe im Bereich von 50 µm bis 5 mm auf.

Die zum Zentrum der Fluidspirale hin stattfindende Verjüngung der Fluidlamellen unterstützt das schnelle Mischen der Fluide.

Weiterhin verhindert die in der äußersten Windung an den seitlichen Innenflächen der Wirbelkammer strömende Fluidlamelle, daß sich an den seitlichen Innenflächen der Wirbelkammer Stoffe ablagern.

Vorteilhaft werden die Fluide getrennt jeweils als einzelne Fluidlamellen in einer Ebene in die Wirbelkammer eingeleitet. Dies wird besonders vorteilhaft dadurch realisiert, daß die Fluide durch um die Wirbelkammer verteilte Zuführkanäle, bevorzugt äquidistant um die Wirbelkammer verteilte Zuführkanäle, getrennt voneinander in die Wirbelkammer eingeleitet werden. Die einzuleitenden Fluidströme können die gleichen Fluide oder auch unterschiedliche Fluide aufweisen, die dann erst in dem gemeinsamen Raum kontaktiert und gemischt werden.

Gemäß einer weiteren Ausführungsform können die Fluide getrennt als einzelne Fluidlamellen in mehreren Ebenen in die Wirbelkammer eingeleitet werden. So ist es beispielsweise möglich, in einer ersten Ebene einen oder mehrere Gaslamellen und Flüssigkeitslamellen abwechselnd benachbart in die Wirbelkammer einzuleiten und in den darauffolgenden Ebenen jeweils weitere Flüssigkeitslamellen in die Wirbelkammer einzuleiten. Es ist auch möglich, lediglich in der obersten Ebene Fluidlamellen einzuleiten und in allen darunterliegenden Ebenen keine Flüssigkeitslamellen zuzuführen. Dies kann beispielsweise dadurch realisiert werden, daß die Höhe der Wirbelkammer vergrößert wird, wobei sich z.B. der Auslaß am Boden und die Einlässe nahe der Decke der Wirbelkammer befinden, so daß der ebenen Fluidbewegung eine vertikale Bewegung überlagert wird. Anstatt spiralförmiger Trajektorien werden helikale Trajektorien erhalten. Dadurch kann man z.B. die Verweil- und Kontaktzeit von Gasblasen in bzw. mit einer Flüssigkeitsphase erhöhen. Werden in den weiteren nach unten folgenden Ebenen weitere Gesamtfluidströme in die Wirbelkammer eingeleitet, so bilden diese weniger Windungen bis zur Ableitung aus der Wirbelkammer aus.

Durch diese Ausführungsform wird durch die Verlängerung des Fluidstroms und der höheren Anzahl an Windungen der sich auszubildenden Fluidspirale eine noch größere Verweilzeit der Fluidströme in der Wirbelkammer erreicht.

Vorteilhaft wird mindestens ein Fluid mindestens als zwei Fluidlamellen in die Wirbelkammer eingeleitet.

Gemäß einer bevorzugten Ausführungsform werden mindestens zwei Fluide jeweils mindestens als zwei Fluidlamellen räumlich alternierend in die Wirbelkammer eingeleitet, so daß sich in der Fluidspirale abwechselnd benachbarte Fluidlamellen der beiden Fluide ausbilden. Hierdurch werden entsprechend zwei oder mehr Fluidlamellen erhalten, die nach innen strömende Fluidspiralen bilden. Die Fluidspiralen liegen derart gemeinsam in einer Ebene und um ein Zentrum, daß die jeweiligen Windungen benachbart zueinander liegen. So resultiert bei beispielsweise zwei oder drei eingeleiteten Fluidlamellen eine Art Doppel- oder Dreifachspirale.

Vorteilhaft besitzt die Wirbelkammer eine im wesentlichen runde oder ovale Form in einer oder mehreren Ebenen der Fluidspirale, um ein Ausbilden der Fluidspirale bei laminaren Strömungsverhältnissen und geringem Druckverlust zu ermöglichen.

Es kann von Vorteil sein, in die Fluide und oder in die Wirbelkammer ein weiteres Fluid einzuleiten. Das weitere Fluid kann einen die Mischung stabilisierenden Hilfsstoff, beispielsweise einen Emulgator, aufweisen. Es ist auch denkbar, daß die Fluide bereits einen solchen Hilfsstoff beigemischt enthalten.

Vorteilhaft werden die Fluide vor dem Einleiten in die Wirbelkammer fokussiert. Unter Fokussierung wird hierbei eine Verdichtung des Fluids verstanden, die zu einer Erhöhung der Strömungsgeschwindigkeit führt. Dies kann durch die Verengung vor dem Eintritt in die Wirbelkammer erzeugt werden, so daß die Dicke der Fluidlamellen verringert wird. Die Querschnittsverengung kann mehr als 40%, vorzugsweise mehr als 50%, insbesondere mehr als 60% betragen. Je dünner die Fluidlamellen sind, desto mehr Windungen bilden sich bei der Fluidspirale in der Wirbelkammer aus.

Die Einstellung der gewünschten Verhältnisse kann insbesondere durch eine entsprechende Wahl der Querschnittsfläche der in die Wirbelkammer eingeleiteten Fluidlamellen, der Form und Abmessungen der Wirbelkammer sowie der Querschnittsfläche des Auslasses für die gebildete Mischung aus der Wirbelkammer erreicht werden.

Vorteilhaft werden die Fluidlamellen in einem spitzen Winkel oder bevorzugt tangential in die Wirbelkammer eingeleitet, insbesondere um möglichst viele Windungen der Fluidspirale zu generieren, und um Totwasserbereiche, d. h. Bereiche, die nicht ständig durchströmt werden, zu vermeiden.

Der statische Mikrovermischer ist dadurch gekennzeichnet, daß die Mischkammer eine Wirbelkammer ist, in die die Fluidkanäle derart einmünden, daß die Fluidlamellen als Fluidstrahlen eintreten unter Ausbildung einer nach innen strömenden Fluidspirale und daß mindestens eine Abführung fluidisch mit der Wirbelkammer zum Ableiten der gebildeten Mischung in Verbindung steht.

Bezüglich der mit diesem Mikrovermischer verbundenen Vorteile wird auf obige Ausführungen zum erfindungsgemäßen Verfahren, insbesondere zu geringem Druckverlust, Erhöhung der für die diffusive Mischung zur Verfügung stehenden Kontaktfläche und kleine Bauform verwiesen.

Eine schnelle Mischung wird durch die Erzeugung sehr dünner Fluidlamellen und damit durch eine Reduktion des Diffusionswegs erreicht. Die Fluidlamellen werden der Wirbelkammer zugeführt, die eine weitere Reduktion des Diffusionswegs durch Verkippung der Fluidlamellen und Verringerung der Lamellenbreite bewirkt. Die Wirbelkammer kann relativ großskalig ausgelegt werden (großer Durchmesser, große Höhe), dennoch werden sehr dünne Fluidlamellen erzeugt. Der Druckverlust in der Wirbelkammer kann, durch den großen hydraulischen Durchmesser, gering gehalten werden. Nur die Einschnürung der Zuführungskanäle trägt dann wesentlich zum Druckverlust bei. Diese Einschnürung kann jedoch sehr lokal geschehen, so daß es nur zu einem moderaten Druckverlust kommt.

Die minimale erzielbare Lamellendicke des Mischers wird im wesentlichen durch die Breite der Zuführkanäle zur Wirbelkammer definiert. Diese Breite kann jedoch aus fertigungstechnischen Gründen nicht beliebig gering gewählt werden. Der Vorteil des Mischers liegt im geringen Platzbedarf und in der einfachen Fertigung.

Besonders bevorzugt sind die Zuführkanäle in einer Ebene um die gemeinsame Wirbelkammer einmündend angeordnet. Die mindestens zweifach vorhandenen Zuführkanäle sind räumlich voneinander getrennt, bevorzugt äquidistant um die Wirbelkammer verteilt, angeordnet und lediglich über die gemeinsame Wirbelkammer fluidisch miteinander in Verbindung. Diese Strukturen können der Zuführung der gleichen Fluide, beispielsweise zweifach der Fluide A, B, oder aber auch unterschiedlicher Fluide, beispielsweise die Fluide A, B und C, D, dienen. Es können aber auch in verschiedenen Ebenen mindestens zwei um die Wirbelkammer angeordnete Zuführkanäle zur Zuführung der Fluide vorgesehen sein.

Im Sinne einer einfachen technischen Realisierung ist es von Vorteil, wenn die Zuführkanäle und/oder die Wirbelkammer die gleiche Tiefe aufweisen.

Besonders bevorzugt weist die Wirbelkammer eine im wesentlichen zylindrische Form auf. Vorteilhaft ist hierbei die Höhe der Zuführkanäle, zumindest im Bereich der Einmündung, kleiner oder gleich der Höhe der Wirbelkammer. Vorzugsweise sind die Zuführkanäle nur in einem oberen Bereich der Wirbelkammer vorgesehen, deren Höhe damit geringer ist als die Höhe der Wirbelkammer. Der Bereich der Wirbelkammer von den Zuführkanälen bis zum Boden weist in dieser Ausführungsform keine Zuführkanäle auf.

Gemäß einer Ausführungsvariante weisen die Zuführkanäle über ihre gesamte Länge einen im wesentlichen gleichbleibenden Querschnitt auf.

Nach einer anderen Ausführungsvariante weisen die Zuführkanäle einen sich auf die Wirbelkammer hin verengenden, beispielsweise trichterförmigen oder tropfenförmigen, Querschnitt auf. Da die Verengung nur direkt am Übergang zur Wirbelkammer stattfindet, wird der Druckverlust begrenzt. Außer tropfenförmigen Kanälen sind jedoch auch andere derartige Ausgestaltungen wie eine Zuführung von oben denkbar. Die Beschleunigung der Strömung ist hier nicht wichtig, sondern nur die Tatsache, daß durch die Verengung eine geringe Lamellendicke erreicht wird. Hierdurch wird eine Reduzierung der Breite und/oder Querschnittsfläche der in die Wirbelkammer eintretenden Fluidlamellen bei gleichzeitiger Erhöhung der Fließgeschwindigkeit erreicht.

Vorteilhaft ist das Verhältnis der Breite der in die Wirbelkammer einmündenden Zuführkanäle zum Durchmesser der Wirbelkammer in der oder den Ebenen, der sich ausbildenden Fluidspirale, kleiner oder gleich 1 zu 10. Vorzugsweise weist die Wirkbellmmmer in einer oder mehreren Ebenen einen runden oder ovalen Querschnitt auf.

Der Durchmesser der Wirbelkammer liegt vorzugsweise bei 2 mm bis 20 cm, vorzugsweise bei 5 mm bis 10 cm.

Der oder die Auslaßkanäle münden vorzugsweise unter- und/oder oberhalb eines zentralen Bereichs, insbesondere im Bereich des Mittelpunkts, in die Wirbelkammer. Die Querschnittsfläche des oder der Abführungen ist vorteilhaft im Vergleich zum Durchmesser der Wirbelkammer und zur Querschnittsfläche des einmündenden Zuführkanäle so bemessen, daß sich eine Fluidspirale mit einer Vielzahl von Windungen ausbilden kann. Vorzugsweise beträgt das Verhältnis des Durchmessers der Abführung zum Durchmesser der Wirbelkammer kleiner gleich 1 zu 5.

Gemäß einer weiteren Ausführungsform münden in mindestens einen Zuführkanal oder in die Wirbelkammer ein oder mehrere weitere Zuführkanäle zum Zuführen eines weiteren Fluids ein. Solche Fluide können einen die Mischung stabilisierenden Hilfsstoff, beispielsweise einen Emulgator, aufweisen. Vorteilhaft münden diese weiteren Zuführkanäle tangential in die Wirbelkammer, so daß zwischen benachbarten Windungen der Fluidspirale jeweils ein Strom des weiteren Fluids liegt.

In einer bevorzugten Ausführungsform sind die Zuführkanäle vorzugsweise in einem spitzen Winkel oder bevorzugt tangential in die Wirbelkammer einmündend angeordnet. Dies ermöglicht insbesondere ein Einleiten der Fluide als Fluidlamellen unter Beibehaltung laminarer Strömungsverhältnisse und ein Ausbilden einer Fluidspirale mit einer Vielzahl von Windungen.

Gemäß einer weiteren bevorzugten Ausführungsform sind die Fluidführungsstrukturen, wie Zuführkanäle, Wirbelkammern oder Zuführungen, als Ausnehmungen und/oder Durchbrüche in Platten aus einem für die zu mischenden Fluide ausreichend inerten Material eingebracht. Ausnehmungen, wie beispielweise Nuten oder Sacklöcher, sind in einer Ebene sowie senkrecht hierzu von Material umgeben. Durchbrüche, wie beispielsweise Schlitze oder Löcher, gehen dagegen durch das Material hindurch, d.h. sind nur in einer Ebene seitlich von dem Material umgeben. Die offenen Strukturen der Ausnehmungen und Durchbrüche werden durch Stapelung mit weiteren Platten zu Fluidführungsstrukturen, wie Zuführkanälen, Wirbelkammern oder Zuführungen, wobei die den Plattenstapel fluidisch dicht nach außen abschließenden Deck- und/oder Bodenplatten Zuführungen für die beiden Fluide und/oder mindestens eine Abführung für die gebildete Mischung aufweisen. Die Zuführungen und/oder Abführungen in der Deck- und/oder Bodenplatte können durch Nuten und/oder Durchbrüche realisiert sein.

In einer bevorzugten Ausführungsvariante dieser Ausführungsform sind die Strukturen der Zuführkanäle und der Wirbelkammer als Ausnehmungen und/oder Durchbrüche in mindestens einer als Mischerplatte dienenden Platte eingebracht. Diese offenen Strukturen sind durch eine mit der Mischerplatte fluidisch dicht verbundene Verteiler-, und/oder Bodenplatte abgeschlossen, wobei die Zuführungen der Verteilerplatte ihrerseits wieder mit einer Deckplatte abgeschlossen sind. Die Deck- und/oder Bodenplatte weisen jeweils Zuführungen für die beiden Fluide und mindestens eine Abführung für die gebildete Mischung auf.

Gemäß einer weiteren Variante dieser bevorzugten Ausführungsform weist der statische Mikrovermischer zwischen der Mischerplatte und der Verteilerplatte eine mit diesen fluidisch dicht in Verbindung stehende Lochplatte zum getrennten Zuführen der Fluide von den Zuführungen in der Verteilerplatte zu den Zuführkanälen der Mischerplatte auf. Hierzu weist die Lochplatte vorteilhaft je zuzuführendem Fluid eine Reihe von Durchbrüchen in Form von Löchern auf, wobei jedes Loch genau einem Zuführkanal zugeordnet ist. So dienen bei zwei Fluiden die Durchbrüche jeweils abwechselnd der Zuführung des ersten Fluids bzw. des zweiten Fluids.

Als geeignete Materialien kommen in Abhängigkeit von den verwendeten Fluiden unterschiedliche Materialien, wie beispielsweise Polymermaterialien, Metalle, Legierungen, wie zum Beispiel Edelstähle, Gläser, Quarzglas, Keramik oder Halbleitermaterialien, wie Silizium, in Frage. Bevorzugt sind Platten einer Stärke von 10 µm bis 5 mm, besonders bevorzugt von 50 µm bis 1 mm. Geeignete Verfahren zum fluidisch dichten Verbinden der Platten miteinander sind beispielsweise aneinander Pressen, Verwenden von Dichtungen, Kleben oder anodisches Bonden.

Als Verfahren zur Strukturierung der Platten kommen bekannte feinwerk- und mikrotechnische Herstellungsverfahren in Frage, wie beispielsweise Laserablatieren, Funkenerodieren, Spritzgießen, Prägen oder galvanisches Abscheiden. Geeignet sind auch LIGA-Verfahren, die zumindest die Schritte des Strukturierens mit energiereicher Strahlung und galvanisches Abscheiden und ggf. Abformen umfassen.

Das erfindungsgemäße Verfahren und der statische Mikrovermischer werden vorteilhaft zur Durchführung chemischer Reaktionen mit zwei oder mehr Stoffen verwendet, wobei beide Stoffe in einem eingeleiteten Fluid oder ein erster Stoff in einem ersten Fluid und ein zweiter Stoff in einem weiteren eingeleiteten Fluid enthalten sind. Hierzu sind in den statischen Mikrovermischer vorteilhaft Mittel zur Steuerung der chemischen Umsetzung integriert, wie beispielsweise Temperatur- oder Drucksensoren, Durchflußmesser, Heizelemente, Verweilrohre oder Wärmetauscher. Diese Mittel können bei einem statischen Mikrovermischer auf einer ober- und/oder unterhalb der die Wirbelkammer aufweisenden Platte angeordnet und mit dieser funktionell in Verbindung stehenden Platte angeordnet sein. Zur Durchführung heterogen katalysierter chemischer Umsetzungen kann der statische Mikrovermischer auch katalytisches Material aufweisen.

Besonders vorteilhaft wird das erfindungsgemäße Verfahren und der erfindungsgemäße Mikrovermischer zur Herstellung einer gas-flüssig-Dispersion verwendet, wobei mindestens ein eingeleitetes Fluid ein Gas oder ein Gas-Gemisch und mindestens ein weiteres eingeleitetes Fluid eine Flüssigkeit, ein Flüssigkeitsgemisch, eine Lösung, eine Dispersion oder eine Emulsion aufweist.

Nachfolgend werden beispielhafte Ausführungsformen des erfindungsgemäßen statischen Mikrovermischers an Hand von Zeichnungen exemplarisch erläutert.
Es zeigen:
- Figur 1: einen statischen Mikrovermischer, bestehend aus einer Deckplatte, Verteilerplatte, Lochplatte, Mischerplatte, und Bodenplatte jeweils voneinander getrennt in perspektivischer Darstellung,
- Figur 2: eine bevorzugte Mischerplatte nach Figur 1 in Draufsicht,
- Figur 3: REM-Aufnahme vom Ausschnitt einer Mischerplatte mit Wirbelkammer und Zuführkanälen,
- Figur 4 a,b,c,d: Aufnahmen von Ausschnitten des Mikrovermischers bei der Mischung unterschiedlich gefärbter, wässriger Lösungen bei unterschiedlichen Durchflußmengen.
- Figur 5: eine zeichnerische Darstellung der Figur 4c und
- Figur 6: eine Fluidspirale zur Herstellung eines Gas-/Flüssigkeitsgemisches.

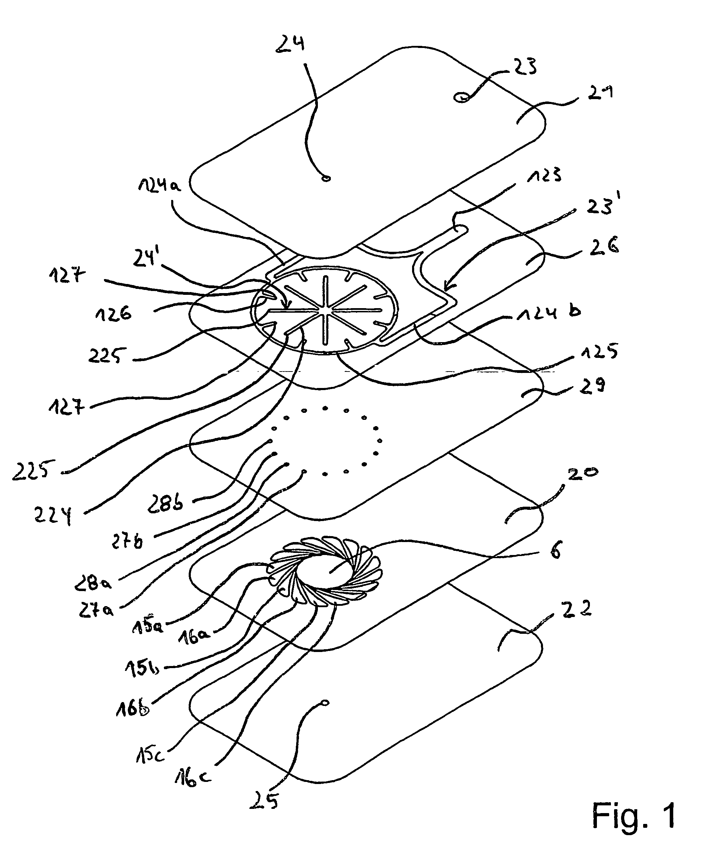

Die Figur 1 zeigt einen statischen Milffovermischer 1 mit einer Deckplatte 21, einer Verteilerplatte 26, einer Lochplatte 29, einer Mischerplatte 20 und einer Bodenplatte 22 jeweils voneinander getrennt in perspektivischer Darstellung.

Die Deckplatte 21 weist jeweils eine Zuführung 23 für das Fluid A und eine Zuführung 24 für das Fluid B in Form einer durchgehenden Bohrung auf. Die Bohrungen sind derart angeordnet, daß beim Übereinanderstapeln der genannten Platten 21, 26, 29, 20, 22 die Zuführungen 23, 24 mit auf der Verteilerplatte 26 angeordneten nutenförmigen Zuführungen 23', 24' fluidisch in Verbindung stehen. Die nutenförmigen Zuführungen 23', 24' bilden jeweils ein Kanalsystem, um die beiden Fluide auf die Bohrungen 27a, 27b, ... und 28a, 28b ..... der Lochplatte 29 zu verteilen, die Zuführung 23' weist einen Kanal 123 auf, der sich in die Kanaläste 124a, 124b gabelt, die wiederum beidseitig in den Ringkanal 125 münden. Der Ringkanal 125 besitzt radiale Speichen 126, in deren Endpunkte Bohrungen 127 angeordnet sind.

Die nutenförmige Zuführung 24' besitzt sternförmig angeordnete radiale Kanalabschnitte 224, die in ihren äußeren Endpunkten Bohrungen 225 aufweisen.

Die nutenförmigen Zuführungen 23', 24' sind in den Endpunkten mit den durchgehenden Bohrungen derart versehen, daß das Fluid A und das Fluid B auf der darunterliegenden Lochplatte 29 zu jeweils abwechselnd in kreisförmiger angeordneten und durchgehenden Bohrungen 27a, 27b, ... und 28a, 28b, ... ohne wesentlichen Druckverlust geleitet werden kann.

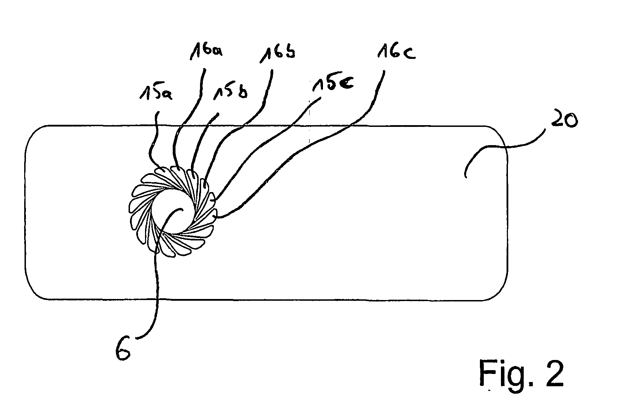

Die in Figur 2 in Draufsicht gezeigte Mischerplatte 20 weist Zuführkanäle 15a, 15b, ... für Fluid A und Zuführkanäle 16a, 16b, ... für Fluid B sowie eine Wirbelkammer 6 auf. Die Zuführkanäle 15a, b ..... und 16a, b .... sind äquidistant um die Wirbelkammer 6 angeordnet und münden jeweils tangential in die Wirbelkammer. Jeder Zuführkanal besitzt in Draufsicht eine geschwungene Tropfenform mit einem sich in Richtung Wirbelkammer verjügenden Querschnitt. Die in Figur 1 gezeigte Bodenplatte weist eine Abführung 25 in Form einer durchgehenden Bohrung auf, die beim Übereinanderstapeln der Platten derart positioniert ist, daß sie mit einem zentralen Bereich der Mischerplatte 20 fluidisch in Verbindung steht. Die Bohrungen 27a, 27b, ... und 28a, 28b, ... der Lochplatte 29 sind ebenfalls jeweils in einem Kreis derart angeordnet, daß die Zuführkanäle 15a, 15b, ... und 16a, 16b, ... jeweils fluidisch mit einer Bohrung kontaktiert werden. Die Zuführkanäle 15a, 15b, und 16a, 16b, ... münden jeweils tangential in die Wirbelkammer 6 ein, die von einer in der Ebene der Mischerplatte 20 kreisrunden Kammer gebildet ist. Die Strukturen der Zuführkanäle 15a, 15b, ... und 16a, 16b ... sowie die Strukturen der Wirbelkammer 6 sind als durch das Material der Mischerplatte 20 hindurchgehende Durchbrüche gebildet, wodurch diese Strukturen die gleiche Tiefe aufweisen. Durch die darunterliegende Bodenplatte 22 und die darüberliegende Lochplatte 29 werden diese zu zwei Seiten hin offenen Strukturen unter Bildung von Kanälen bzw. Kammern abgedeckt.

Beim betriebsfertigen Mikrovermischer 1 sind die hier voneinander getrennt dargestellten Platten 21, 26, 29, 20 und 22 übereinander gestapelt und fluidisch dicht miteinander verbunden, wodurch die offenen Strukturen, wie Nuten und Bohrungen bzw. Durchbrüche unter Bildung von Kanälen und Kammern abgedeckt sind. Der so erhaltene Stapel aus den Platten 21, 26, 29, 20 und 22 kann in ein Mischergehäuse aufgenommen sein, das geeignete fluidische Anschlüsse für die Zuführung von zwei Fluiden und die Abführung des Fluidgemischs aufweist. Darüber hinaus kann durch das Gehäuse eine Anpreßkraft auf den Plattenstapel zum fluidisch dichten Verbinden aufgebracht werden. Es ist auch denkbar, den Plattenstapel als Mikrovermischer 1 ohne Gehäuse zu betreiben, wozu mit den Zuführungen 23, 24 und der Abführung 25 der Deckplatte 21 und der Bodenplatte 22 vorteilhaft fluidische Anschlüsse, beispielsweise Schlauchtüllen, verbunden sind.

Beim eigentlichen Mischvorgang wird in die Zuführungsbohrung 23 und in die Zuführungsbohrung 24 der Deckplatte 21 jeweils ein Fluid A und ein Fluid B eingeleitet. Diese Fluide strömen jeweils durch die Zuführungen 23' und 24' der Verteilerplatte 26 und werden von dort gleichmäßig jeweils in die Bohrungen 27a, 27b, ... und 28a, 28b, ... der Lochplatte 29 verteilt. Von den Bohrungen 28a, 28b, ... der Lochplatte 29 strömt das Fluid A in die exakt darunter angeordneten Zuführkanäle 15a, 15b, ... der Mischerplatte 20. Ebenso gelangt das Fluid B von den Bohrungen 27a, 27b, ... der Lochplatte 29 in die exakt darunter angeordneten Zuführkanäle 16a, 16b, .... Die in den Zuführkanälen 15a, 15b, ... und 16a, 16b, ... getrennt geführten Fluidströme A, B werden in der Wirbelkammer 6 unter Bildung abwechselnd benachbarter Fluidlamellen der Folge ABAB zusammengeführt. Bedingt durch die sich verengende Form der Zuführkanäle 15a, 15b, ... und 16a, 16b, ... werden die Fluidlamellen fokussiert, tangential in die Wirbelkammer 6 eingeleitet. Es bildet sich in der Wirbelkammer 6 eine konzentrisch nach Innen strömende Fluidspirale aus. Die gebildete Mischung der Fluide A, B wird durch die sich über dem Mittelpunkt der Wirbelkammer 6 befindliche Abführungsbohrung 25 der Bodenplatte 22 abgeleitet.

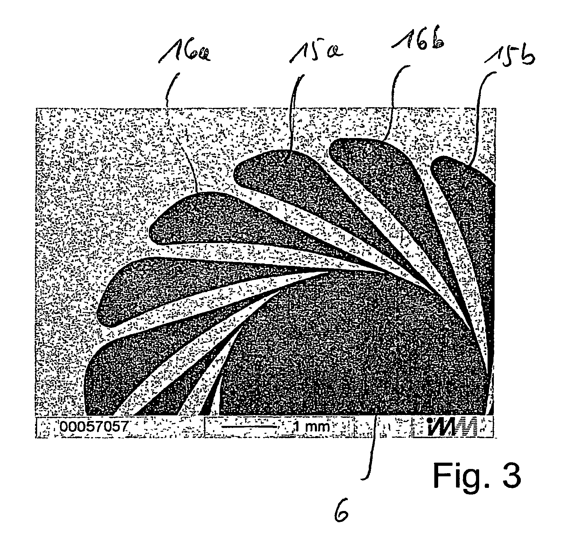

Die in Fig. 3 abgebildete REM-Aufnahme eines Ausschnitts einer Mischerplatte 20 eines erfindungsgemäßen Mischers zeigt eine Wirbelkammer 6 sowie die Zuführkanäle 15a, 15b, ... und 16a, 16b, ... in der Draufsicht als dunkelgrau gefärbte Bereiche. Die sich verengenden Zuführkanäle münden bei dieser Platte annähernd tangential in die Wirbelkammer ein.

### Beispiel

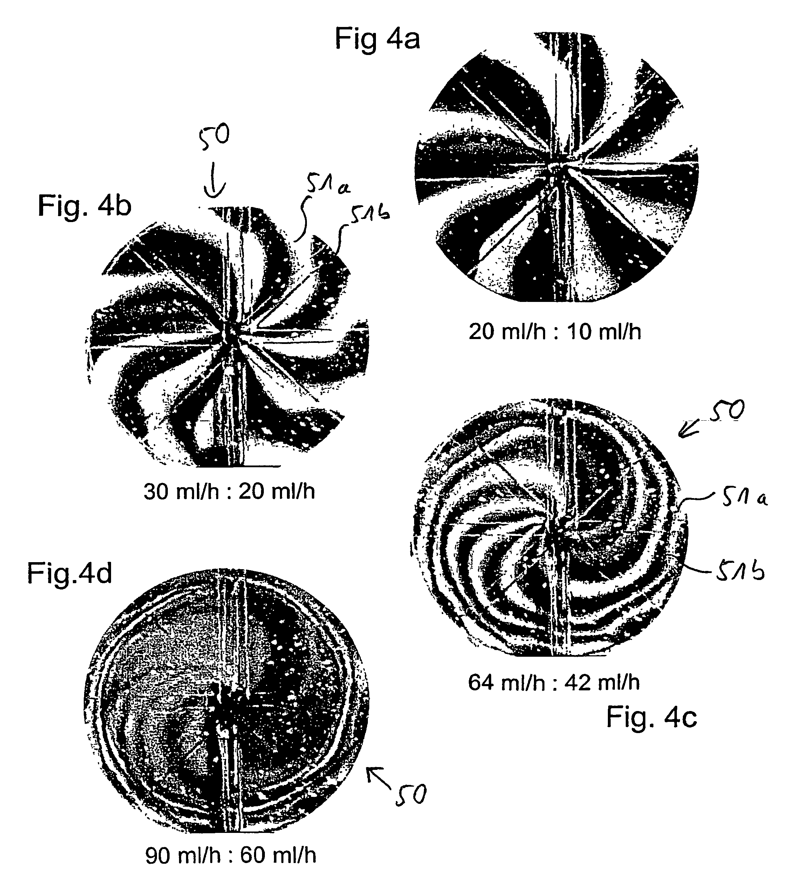

In Versuchen zur Flußvisualisierung der Mischung von Flüssigkeiten, die in den Aufnahmen der Wirbelkammer in den Fig. 4a, 4b, 4c, und 4d dargestellt sind, wurden ungefärbtes Wasser und blau gefärbtes Wasser tangential in eine Wirbelkammer eingeleitet. Bei niedrigen Flußgeschwindigkeiten, wie in Fig. 4a dargestellt, strömen die Flüssigkeiten annähernd direkt, ohne Ausbildung einer Fluidspriale, zur Auslaßmitte. Bei steigenden Flußgeschwindigkeiten, wie in den Fig. 4b bis 4d dargestellt, bilden sich Fluidspiralen 50 aus, wobei mit zunehmender Geschwindigkeit die Länge der spiralförmigen Windungen 51a, b oder der Lamellen zunimmt und damit die Verweildauer der Flüssigkeit im Mikrovermischer. Gleichzeitig werden die Lamellen dünner, wodurch die Vermischung beschleunigt wird. Die vier Strömungsmuster in den Fig. 4a bis 4d entsprechen allerdings allesamt Versuchsparametern, deren Verweilzeit noch zu gering ist, um vollständige Vermischung zu erzeugen.

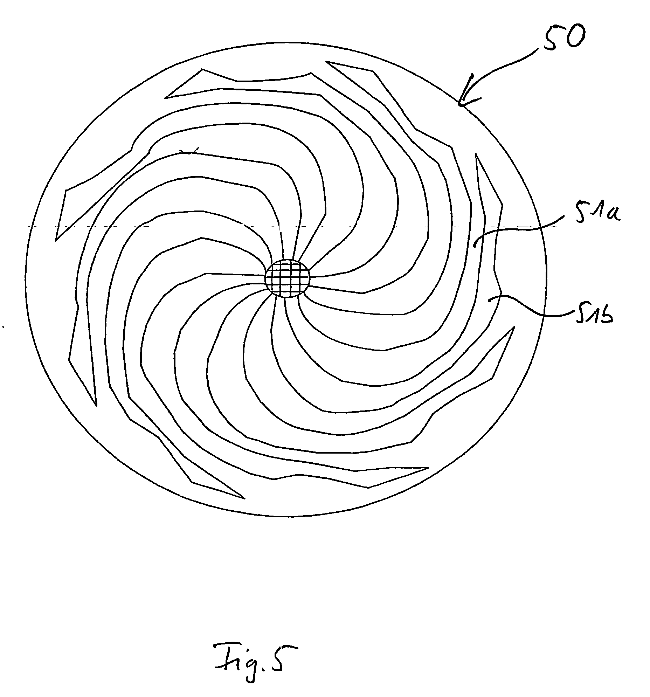

Eine zeichnerische Darstellung der Abbildung der Figur 4c ist in Figur 5 zu sehen.

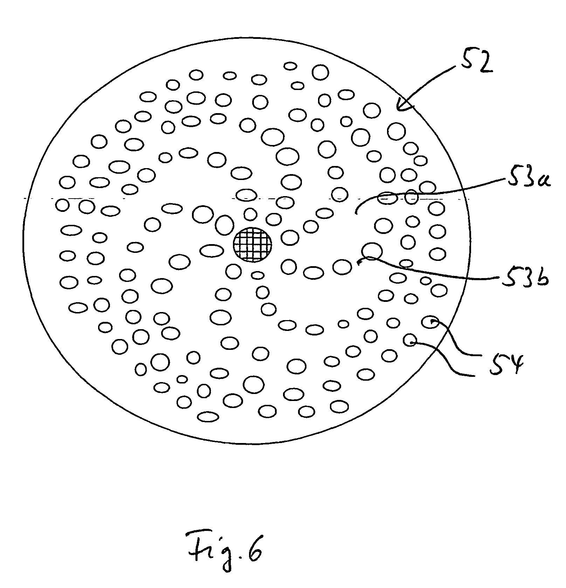

Ergebnisse zur gas-flüssig-Kontaktierung zeigen ebenfalls spiralförmige Strömungsmuster. In der Figur 6 ist eine solche Fluidspirale 52 dargestellt, die aus Flüssigkeitswindungen 53a und Gaswindungen 53b besteht, die wiederum durch Gasblasen 54 gebildet werden. Allerdings ist dieses Muster - im Gegensatz zu der Kontaktierung von Flüssigkeiten - nicht das einzige, das über einen weiten Bereich von Strömungsgeschwindigkeiten gefunden wird. Es werden auch andere Muster beobachtet, z.B. bei niedrigen Gasflüssen ungleichmäßige Eindüsungen von Gas in die Flüssigkeit und bei hohen Gasflüssen ein breiter zentraler Gaskern, der von einem dünnen Flüssigkeitsring umgeben ist. Die Ausbildung der Spirale und damit der für die zur gas-flüssig-Kontaktierung notwendigen großen Oberfläche bedarf also hier einer sorgfältigen Abstimmung der Flüsse von Gas und Flüssigkeit.

Erste Vorversuche zur Absorption von Sauerstoff in Wasser bei Raumtemperatur zeigen, daß der erfindungsgemäße Mikrovermischer eine gegenüber T-Stücken und anderen Mikrovermischern erhöhte Leistungsfähigkeit aufweist, die sogar der von Mikroblasensäulen vergleichbar ist. Letztere sind, wie in der Veröffentlichung von V. Hessel, W. Ehrfeld, K. Golbig, V. Haverkamp, H. Löwe, M. Storz, Ch. Wille, A. Guber, K. Jähnisch, M. Baerns "Gas/Liquid Microreactors for Direct Fluorination of Aromatic Compounds Using Elemental Fluide " in Microreaction Technology: Industrial Prospects, IMRET 3: Proceedings of the Third International Conference on Microreaction Technology, Ed.: W. Ehrfeld, Springer-Verlag, Berlin (2000) S. 526 - 540 beschrieben, aufwendig zusammengesetzte Spezialtools für die gas-flüssig-Kontaktierung mit hohen spezifischen Phasengrenzflächen. Bei einem Fluß von 10 ml/h Sauerstoff und 1000 ml/h Wasser wird im erfindungsgemäßen Mikrovermischer bei Raumtemperatur eine Absorption von 39% des eingesetzten Sauerstoffs gefunden, entsprechend einer Sauerstoffkonzentration von 13,3 mg/l. Unter ansonsten gleichen Versuchsbedingungen erreichen Mikroblasensäulen mit Kanälen mit einem Querschnitt von 300 µm x 300 µm Effektivitäten von 46 % und mit Kanälen mit einem Querschnitt 50 µm x 50 µm von 42 %. Die Sauerstoffabsorption in Interdigital-Mikrovermischem, wie sie in der Übersicht von W. Ehrfeld, V. Hessel, H. Löwe in Microreactors, New Technology for Modem Chemistry, Wiley-VCH 2000, Seiten 64 bis 73 dargestellt sind, beträgt lediglich 30%.

**Tabelle 1**

| **Mischertyp** | **Effizienz der** **Absorption [%]** | **Konzentration** **[g/l]** |
|---|---|---|
| erfindungsgemäßer Mikrovermischer | 39 | 5,2 |
| Interdigitalmikrovermischer | 30 | 4,0 |
| Mikroblasensäule (300 µm x 300 µm) | 46 | 6,1 |
| Mikroblasensäule (50 µm x 50 µm) | 42 | 5,2 |

Der erfindungsgemäße Mikrovermischer weist eine in etwa vergleichbare Effizienz bei der Absorption von Sauerstoff in Wasser bzw. bezüglich der Konzentration von Sauerstoff in Wasser wie die Mikroblasensäule auf. Der mit der Mischung einhergehende Druckverlust ist jedoch im erfindungsgemäßen Mikrovermischer wesentlich geringer als in der Mikroblasensäule, da lediglich die in der äußersten Windung strömende Fluidlamelle an die seitlichen Innenflächen der Wirbelkammer angrenzt und die inneren Windungen der Fluidspirale zu beiden Seiten an die in gleicher Richtung strömenden Fluidlamellen der vorhergehenden und der nachfolgenden Windung angrenzen.

Zur Reibung trägt daher im wesentlichen lediglich der Kontakt mit der oberen und unteren Innenfläche der Wirbelkammer bei. Im Gegensatz dazu werden bei den Mikroblasensäulen lange enge Kanäle benötigt, die einen hohen Druckverlust verursachen. Darüber hinaus ist bei dem erfindungsgemäßen Mikrovermischer durch den spiralförmigen Verlauf eine kompakte Bauform bei langer Verweilstrecke und langer Verweilzeit realisiert.

### Bezugszeichenliste

- 1: Statischer Mikrovermischer
- 6: Wirbelkammer
- 15a, 15b: Zuführkanäle für Fluid A
- 16a, 16b: Zuführkanäle für Fluid B
- 17a, 17b: Zuführkanäle für weiteres Fluid
- 20,20,20',20''': Mischerplatte
- 21: Deckplatte
- 22: Bodenplatte
- 23,23',23,'',23''': Zuführung für Fluid a
- 24,24',24'',24''': Zuführung für Fluid b
- 25: Abführung
- 26: Verteilerplatte
- 27a, 27b: Bohrungen für Fluid a
- 28a, 28b: Bohrungen für Fluid b
- 29: Lochplatte
- 40: Gesamtsystem
- 41: gas-gas-Mischer
- 42: Verweilrohr
- 43',43'',43''': Durchbruch
- 50: Fluidspirale
- 51a, b: Windung
- 52: Fluidspirale
- 53a, b: Windung
- 54: Gasblase
- 123: Kanal
- 124a, 124b: Kanalast
- 125: Ringkanal
- 126: radialer Kanalabschnitt
- 127: Bohrung
- 224: radialer Kanalabschnitt
- 225: Bohrung

## Patentansprüche

1. Verfahren zum Mischen mindestens zweier Fluide, das folgende Schritte umfaßt:
- Einleiten der Fluide als benachbarte Fluidlamellen in eine Wirbelkammer unter Ausbildung einer nach innen strömenden Fluidspirale,
- Ableiten der gebildeten Mischung aus dem Zentrum der Fluidspirale.

2. Verfahren nach Anspruch 1, **dadurch gekennzeichnet, daß** die Fluide getrennt jeweils als einzelne Fluidlamellen in einer Ebene in die Wirbelkammer eingeleitet werden.

3. Verfahren nach Anspruch 1, **dadurch gekennzeichnet, daß** die Fluide getrennt jeweils als einzelne Fluidlamellen in mehreren Ebenen in die Wirbelkammer eingeleitet werden.

4. Verfahren nach einem der vorhergehenden Ansprüche, **dadurch gekennzeichnet, daß** mindestens ein Fluid mindestens als zwei Fluidlamellen in die Wirbelkammer eingeleitet wird.

5. Verfahren nach einem der vorhergehenden Ansprüche, **dadurch gekennzeichnet, daß** mindestens zwei Fluide jeweils mindestens als zwei Fluidlamellen räumlich alternierend derart in die Wirbelkammer eingeleitet werden, so daß sich in der Fluidspirale abwechselnd benachbarte Fluidlamellen der beiden Fluide ausbilden.

6. Verfahren nach einem der vorhergehenden Ansprüche, **dadurch gekennzeichnet, daß** die Wirbelkammer in der oder den Ebenen der sich ausbildenden Fluidspiralen eine im wesentlichen runde oder ovale Form besitzt.

7. Verfahren nach einem der vorhergehenden Ansprüche, **dadurch gekennzeichnet, daß** in die Fluide oder in die Wirbelkammer ein weiteres Fluid, beispielsweise ein einen die Mischung stabilisierenden Hilfsstoff aufweisendes Fluid, eingeleitet wird.

8. Verfahren nach einem der vorhergehenden Ansprüche, **dadurch gekennzeichnet, daß** die Fluide vor dem Einleiten in die Wirbelkammer fokussiert werden.

9. Verfahren nach einem der vorhergehenden Ansprüche, **dadurch gekennzeichnet, daß** die Fluide in einem spitzen Winkel oder bevorzugt tangential als Fluidlamellen in die Wirbelkammer eingeleitet werden.

10. Statischer Mikrovermischer zum Mischen mindestens zweier Fluide mit mindestens zwei Zuführkanälen zur getrennten Zuführung der Fluide als Fluidlamellen und mit einer Mischkammer, in die die Zuführkanäle münden,
**dadurch gekennzeichnet,**
**daß** die Mischkammer eine Wirbelkammer (6) ist, in die die Zuführkanäle (15a,b, 16a,b) derart einmünden, daß die Fluidlamellen als Fluidstrahlen eintreten unter Ausbildung einer nach innen strömenden Fluidspirale (50) und daß mindestens eine Abführung (25) fluidisch mit der Wirkbelkammer (6) zum Ableiten der gebildeten Mischung in Verbindung steht.

11. Statischer Mikrovermischer nach Anspruch 10, **dadurch gekennzeichnet, daß** in einer Ebene mindestens zwei um die Wirbelkammer (6) angeordneten Zuführkanäle (15a, 15b, ...) und/oder (16a, 16b, ...) zur Zuführung der Fluide vorgesehen sind.

12. Statischer Mikrovermischer nach einem der Ansprüche 10 bis 11, **dadurch gekennzeichnet, daß** die Zuführkanäle (15a, 15b, ...) und (16a, 16b, ...) und/oder die Wirbelkammer (6) die gleiche Tiefe aufweisen.

13. Statischer Mikrovermischer nach Anspruch 10, **dadurch gekennzeichnet, daß** in verschiedenen Ebenen mindestens zwei um die Wirbelkammer (6) angeordnete Zuführkanälen (15a, 15b, ...) und/oder (16a, 16b, ...) zur Zuführung der Fluide vorgesehen sind.

14. Statischer Mikrovermischer nach einem der Ansprüche 10 bis 13, **dadurch gekennzeichnet, daß** die Wirbelkammer (6) in einer oder mehreren Ebenen einen im wesentlichen runden oder ovalen Querschnitt aufweist.

15. Statischer Mikrovermischer nach einem der Ansprüche 10 bis 14, **dadurch gekennzeichnet, daß** die Wirbelkammer (6) eine im wesentlichen zylindrische Form aufweist.

16. Statischer Mikrovermischer nach einem der Ansprüche 10 bis 15, **dadurch gekennzeichnet, daß** die Zuführkanäle (15a, 15b, ...) und/oder (16a, 16b, ...) einen sich in Richtung der Wirbelkammer (6) verengenden Querschnitt aufweisen.

17. Statischer Mikrovermischer nach einem der Ansprüche 10 bis 16, **dadurch gekennzeichnet, daß** unterhalb und/ oder oberhalb eines zentralen Bereichs der Wirbelkammer (6) ein oder mehrere Abführungen (25) einmünden.

18. Statischer Mikrovermischer nach einem der Ansprüche 10 bis 17, **dadurch gekennzeichnet, daß** in die Zuführkanäle (15a, 15b, ...) und/oder (16a, 16b, ...) oder die Wirbelkammer (6) ein oder mehrere Zuführkanäle zum Zuführen eines weiteren Fluids, beispielsweise ein einen die Mischung stabilisierenden Hilfsstoff aufweisendes Fluid, einmünden.

19. Statischer Mikrovermischer nach einem der Ansprüche 10 bis 18, **dadurch gekennzeichnet, daß** die Zuführkanäle (15a, 15b, ...) und/oder (16a, 16b, ...) in einem spitzen Winkel oder bevorzugt tangential in die Wirbelkammer (6) einmünden.

20. Statischer Mikrovermischer nach einem der Ansprüche 10 bis 19, **dadurch gekennzeichnet, daß** die Fluidführungsstrukturen, wie die Zuführkanäle (15a, 15b, ...) und (16a, 16b, ...), die Wirbelkammer (6) und die Zuführungen (23, 23', 24, 24') als Ausnehmungen und/oder Durchbrüche in Platten (26, 29, 20) aus einem für die zu mischenden Fluide ausreichend inerten Material eingebracht sind und diese offenen Strukturen durch die Stapelung dieser Platten (26, 29, 20) und durch mindestens eine mit dem Plattenstapel fluidisch dicht verbundene Deck- und/oder Bodenplatte (21, 22) abgeschlossen sind, wobei die Deck- (21) und/ oder Bodenplatte (22) mindestens eine Zuführung (23, 24) für die beiden Fluide und/oder mindestens eine Abführung (25) für die gebildete Mischung aufweisen.

21. Statischer Mikrovermischer nach Anspruch 20, **gekennzeichnet durch** eine zwischen einer Zuführkanäle (15a, 15b, ...) und (16a, 16b, ...) sowie eine Wirbelkammer (6) aufweisende Mischerplatte (20) und einer Verteilerplatte (26) angeordnete und mit diesen fluidisch dicht verbundene Lochplatte (29) zum getrennten Zuführen der Fluide von der mindestens einen Zuführung (23', 24') in der Verteilerplatte (26) über in der Lochplatte (29) vorgesehene Löcher (27a, 27b, ..., 28a, 28b) in die Zuführkanäle (15a, 15b, ...) und/ oder (16a, 16b, ...) in der Mischplatte (20).

22. Verwendung des Verfahrens und/oder des statischen Mikrovermischers nach einem oder mehreren vorhergehenden Ansprüchen zum Reagieren mindestens zweier Stoffe, wobei beide Stoffe in einem eingeleiteten Fluid oder ein erster Stoff in einem ersten Fluid und ein zweiter Stoff in einem weiteren eingeleiteten Fluid enthalten sind.

23. Verwendung des Verfahrens und/oder des statischen Mikrovermischers nach einem oder mehreren vorhergehenden Ansprüchen zur Herstellung einer gas-flüssig-Dispersion, wobei mindestens in einem eingeleiteten Fluid ein Gas oder ein Gasgemisch und mindestens in einem weiteren eingeleiteten Fluid eine Flüssigkeit, ein Flüssigkeitsgemisch, eine Lösung, eine Dispersion oder eine Emulsion enthalten sind.

## Claims

1. Method for mixing at least two fluids, which comprises the following steps:
- introducing the fluids, as adjacent fluid lamellae, into a swirl chamber to form a fluid spiral flowing inwards,
- discharging the mixture formed from the centre of the fluid spiral.

2. Method according to Claim 1, **characterized in that** the fluids are in each case introduced separately, as individual fluid lamellae in one plane, into the swirl chamber.

3. Method according to Claim 1, **characterized in that** the fluids are in each case introduced separately, as individual fluid lamellae in a plurality of planes, into the swirl chamber.

4. Method according to one of the preceding claims, **characterized in that** at least one fluid is introduced into the swirl chamber as at least two fluid lamellae.

5. Method according to one of the preceding claims, **characterized in that** at least two fluids are introduced into the swirl chamber spatially alternately as in each case at least two fluid lamellae, in such a manner that alternately adjacent fluid lamellae of the two fluids are formed in the fluid spiral.

6. Method according to one of the preceding claims, **characterized in that** the swirl chamber is substantially round or oval in the plane or planes of the fluid spirals which form.

7. Method according to one of the preceding claims, **characterized in that** a further fluid, for example a fluid containing an auxiliary that stabilizes the mixture, is introduced into the fluids or into the swirl chamber.

8. Method according to one of the preceding claims, **characterized in that** the fluids are focussed before being introduced into the swirl chamber.

9. Method according to one of the preceding claims, **characterized in that** the fluids are introduced into the swirl chamber at an acute angle or preferably tangentially as fluid lamellae.

10. Static micromixer for mixing at least two fluids, having at least two feed passages for separately supplying the fluids as fluid lamellae, and having a mixing chamber into which the feed passages open out, **characterized in that** the mixing chamber is a swirl chamber (6), into which the feed passages (15a,b, 16a,b) open out in such a manner that the fluid lamellae enter as fluid jets, forming a fluid spiral (50) flowing inwards, and **in that** at least one discharge (25) is in fluid communication with the swirl chamber (6) in order to discharge the mixture which is formed.

11. Static micromixer according to Claim 10, **characterized in that** at least two feed passages (15a, 15b,...) and/or (16a, 16b,...) for supplying the fluids, arranged around the swirl chamber (6), are provided in one plane.

12. Static micromixer according to one of Claims 10 to 11, **characterized in that** the feed passages (15a, 15b,...) and (16a, 16b,...) and/or the swirl chamber (6) are of the same depth.

13. Static micromixer according to Claim 10, **characterized in that** at least two feed passages (15a, 15b,...) and/or (16a, 16b,...) for supplying the fluids, arranged around the swirl chamber (6), are provided in different planes.

14. Static micromixer according to one of Claims 10 to 13, **characterized in that** the swirl chamber (6) is substantially round or oval in cross section in one or more planes.

15. Static micromixer according to one of Claims 10 to 14, **characterized in that** the swirl chamber (6) is substantially cylindrical in form.

16. Static micromixer according to one of Claims 10 to 15, **characterized in that** the feed passages (15a, 15b,...) and/or (16a, 16b,...) have a cross section which narrows in the direction of the swirl chamber (6).

17. Static micromixer according to one of Claims 10 to 16, **characterized in that** one or more discharges (25) open out above and/or below a central region of the swirl chamber (6).

18. Static micromixer according to one of Claims 10 to 17, **characterized in that** one or more feed passages for supplying a further fluid, for example a fluid containing an auxiliary that stabilizes the mixture, open out into the feed passages (15a, 15b,...) and/or (16a, 16b,...) or the swirl chamber (6).

19. Static micromixer according to one of Claims 10 to 18, **characterized in that** the feed passages (15a, 15b,...) and/or (16a, 16b,...) open out into the swirl chamber (6) at an acute angle or preferably tangentially.

20. Static micromixer according to one of Claims 10 to 19, **characterized in that** the fluid-guiding structures, such as the feed passages (15a, 15b,...) and (16a, 16b,...), the swirl chamber (6) and the feeds (23, 23', 24, 24') are introduced as recesses and/or apertures into plates (26, 29, 20) made from a material that is sufficiently inert with respect to the fluids that are to be mixed, and these open structures are closed off by stacking these plates (26, 29, 20) and by at least one cover and/or base plate (21, 22), which is connected to the plate stack in a fluid-tight manner, the cover plate (21) and/or base plate (22) having at least one feed (23, 24) for the two fluids and/or at least one discharge (25) for the mixture that is formed.

21. Static micromixer according to Claim 20, **characterized by** a perforated plate (29), which is arranged between a mixer plate (20) that has feed passages (15a, 15b,...) and (16a, 16b,...) and has a swirl chamber (6) and a distributor plate (26) and which is connected thereto in a fluid-tight manner, for separately feeding the fluids from the at least one feed (23', 24') in the distributor plate (26), via holes (27a, 27b,..., 28a, 28b) provided in the perforated plate (29), into the feed passages (15a, 15b,...) and/or (16a, 16b,...) in the mixing plate (20).

22. Use of the method and/or the static micromixer according to one or more of the preceding claims for reacting at least two substances, both substances being contained in one introduced fluid or a first substance being contained in a first fluid and a second substance being contained in a further introduced fluid.

23. Use of the method and/or the static micromixer according to one or more of the preceding claims for producing a gas/liquid dispersion, in which a gas or a gas mixture is contained in at least one introduced fluid, and a liquid, a liquid mixture, a solution, a dispersion or an emulsion is contained in at least one further introduced fluid.

## Revendications

1. Procédé pour mélanger au moins deux fluides, qui comprend les étapes suivantes :
- introduction des fluides sous forme de lamelles fluides adjacentes dans une chambre de tourbillonnement en formant une spirale fluide s'écoulant vers l'intérieur,
- évacuation du mélange formé hors du centre de la spirale fluide.

2. Procédé selon la revendication 1, **caractérisé en ce que** les fluides sont introduits séparément à chaque fois sous forme de lamelles fluides individuelles dans un plan dans la chambre de tourbillonnement.

3. Procédé selon la revendication 1, **caractérisé en ce que** les fluides sont introduits séparément à chaque fois sous forme de lamelles fluides individuelles dans plusieurs plans dans la chambre de tourbillonnement.

4. Procédé selon l'une quelconque des revendications précédentes, **caractérisé en ce qu'**au moins un fluide est introduit au moins sous forme de deux lamelles fluides dans la chambre de tourbillonnement.

5. Procédé selon l'une quelconque des revendications précédentes, **caractérisé en ce qu'**au moins deux fluides sont introduits à chaque fois en alternance spatiale au moins sous forme de deux lamelles fluides dans la chambre de tourbillonnement de telle sorte qu'il se forme des lamelles fluides adjacentes des deux fluides en alternance dans la spirale fluide.

6. Procédé selon l'une quelconque des revendications précédentes, **caractérisé en ce que** la chambre de tourbillonnement possède une forme essentiellement ronde ou ovale dans le ou les plans des spirales fluides se formant.

7. Procédé selon l'une quelconque des revendications précédentes, **caractérisé en ce qu'**un fluide supplémentaire, par exemple un fluide présentant un adjuvant stabilisant le mélange, est introduit dans les fluides ou dans la chambre de tourbillonnement.

8. Procédé selon l'une quelconque des revendications précédentes, **caractérisé en ce que** les fluides sont concentrés avant l'introduction dans la chambre de tourbillonnement.

9. Procédé selon l'une quelconque des revendications précédentes, **caractérisé en ce que** les fluides sont introduits suivant un angle aigu ou de préférence tangentiellement sous forme de lamelles fluides dans la chambre de tourbillonnement.

10. Micromélangeur statique pour mélanger au moins deux fluides, comprenant au moins deux conduits d'amenée pour l'alimentation séparée des fluides sous forme de lamelles fluides et comprenant une chambre de mélange dans laquelle débouchent les conduits d'amenée,
**caractérisé en ce que**
la chambre de mélange est une chambre de tourbillonnement (6) dans laquelle les conduits d'amenée (15a,b, 16a,b) débouchent de telle sorte que les lamelles fluides pénètrent sous forme de jets de fluide en formant une spirale fluide (50) s'écoulant vers l'intérieur et **en ce qu'**au moins une évacuation (25) est en liaison fluidique avec la chambre de tourbillonnement (6) pour l'évacuation du mélange formé.

11. Micromélangeur statique selon la revendication 10, **caractérisé en ce que** l'on prévoit dans un plan au moins deux conduits d'amenée (15a, 15b, ...) et/ou (16a, 16b, ...) disposés autour de la chambre de tourbillonnement (6), pour l'alimentation des fluides.

12. Micromélangeur statique selon l'une quelconque des revendications 10 à 11, **caractérisé en ce que** les conduits d'amenée (15a, 15b, ...) et (16a, 16b, ...) et/ou la chambre de tourbillonnement (6) présentent la même profondeur.

13. Micromélangeur statique selon la revendication 10, **caractérisé en ce que** l'on prévoit dans divers plans au moins deux conduits d'amenée (15a, 15b, ...) et/ou (16a, 16b, ...) disposés autour de la chambre de tourbillonnement (6), pour l'alimentation des fluides.

14. Micromélangeur statique selon l'une quelconque des revendications 10 à 13, **caractérisé en ce que** la chambre de tourbillonnement (6) présente, dans un ou plusieurs plans, une section transversale essentiellement ronde ou ovale.

15. Micromélangeur statique selon l'une quelconque des revendications 10 à 14, **caractérisé en ce que** la chambre de tourbillonnement (6) présente une forme essentiellement cylindrique.

16. Micromélangeur statique selon l'une quelconque des revendications 10 à 15, **caractérisé en ce que** les conduits d'amenée (15a, 15b, ...) et/ou (16a, 16b, ...) présentent une section transversale se rétrécissant dans la direction de la chambre de tourbillonnement (6).

17. Micromélangeur statique selon l'une quelconque des revendications 10 à 16, **caractérisé en ce qu'**une ou plusieurs évacuations (25) débouchent en dessous et/ou au-dessus d'une partie centrale de la chambre de tourbillonnement (6).

18. Micromélangeur statique selon l'une quelconque des revendications 10 à 17, **caractérisé en ce qu'**un ou plusieurs conduits d'amenée pour l'alimentation d'un fluide supplémentaire, par exemple un fluide présentant un adjuvant stabilisant le mélange, débouchent dans les conduits d'amenée (15a, 15b, ...) et/ou (16a, 16b, ...) ou dans la chambre de tourbillonnement (6).

19. Micromélangeur statique selon l'une quelconque des revendications 10 à 18, **caractérisé en ce que** les conduits d'amenée (15a, 15b, ...) et/ou (16a, 16b, ...) débouchent suivant un angle aigu ou de préférence tangentiellement dans la chambre de tourbillonnement (6).

20. Micromélangeur statique selon l'une quelconque des revendications 10 à 19, **caractérisé en ce que** les structures de guidage des fluides, telles que les conduits d'amenée (15a, 15b, ...) et (16a, 16b, ...), la chambre de tourbillonnement (6) et les alimentations (23, 23', 24, 24') sont pratiquées sous forme d'évidements et/ou de perçages dans des plaques (26, 29, 20) en un matériau suffisamment inerte pour les fluides à mélanger et ces structures ouvertes sont fermées par l'empilage de ces plaques (26, 29, 20) et par au moins une plaque de couvercle et/ou de fond (21, 22) connectée de manière étanche aux fluides à l'empilement de plaques, la plaque de couvercle (21) et/ou de fond (22) présentant au moins une alimentation (23, 24) pour les deux fluides et/ou au moins une évacuation (25) pour le mélange formé.

21. Micromélangeur statique selon la revendication 20, **caractérisé par** une plaque perforée (29) disposée entre une plaque de mélange (20) présentant des conduits d'amenée (15a, 15b, ...) et (16a, 16b, ...) ainsi qu'une chambre de tourbillonnement (6) et une plaque de distribution (26) et connectée de manière étanche aux fluides à celles-ci, pour l'alimentation séparée des fluides de l'au moins une alimentation (23', 24') dans la plaque de distribution (26) par le biais de perforations (27a, 27b, ..., 28a, 28b) prévues dans la plaque perforée (29), dans les conduits d'amenée (15a, 15b, ..) et/ou (16a, 16b, ...) dans la plaque de mélange (20).

22. Utilisation du procédé et/ou du micromélangeur statique selon l'une quelconque ou plusieurs des revendications précédentes, pour faire réagir au moins deux substances, les deux substances étant contenues dans un fluide introduit ou une première substance étant contenue dans un premier fluide et une deuxième substance étant contenue dans un fluide introduit supplémentaire.

23. Utilisation du procédé et/ou du micromélangeur statique selon l'une quelconque ou plusieurs des revendications précédentes, pour la fabrication d'une dispersion fluide-gaz, dans laquelle sont contenus au moins dans un fluide introduit, un gaz ou un mélange de gaz, et au moins dans un autre fluide introduit, un liquide, un mélange de liquide, une solution, une dispersion ou une émulsion.
